# EUROPEAN PATENT APPLICATION

(11) **EP 2 487 012 A1**
(43) Date of publication of application: **15.08.2012**
(21) Application number: 10821597.1
(22) Date of filing: 09.10.2010
(51) Int. Cl.: B26D 1/15, B26D 1/60

(54) **METHOD FOR CUTTING PLASTIC EXTRUSION PRODUCTS, CUTTING DEVICE FOR THE METHOD AND CUTTING MACHINE WITH THE DEVICE**

(30) Priority: 10.10.2009 CN 200910205331
(71) Applicant: Jinan Deca Machine Co., Ltd., Jinan, Shandong 250101 (CN)
(72) Inventor: DENG, Xiaoou, Jinan Shandong 250101 (CN); WU, Kuanhong, Jinan Shandong 250101 (CN)
(74) Representative: Grünecker, Kinkeldey, Stockmair & Schwanhäusser
(86) International application number: PCT/CN2010/077617
(87) International publication number: WO 2011/041988

(57) **Abstract**

A method for extruded plastic profiles comes to the public. In the rotary cutting process, the toothless circular cutter (4) is used to feed toward the profile until the finished products are cut off. This method involves the rational choice of a toothless circular cutter (4) on the angle, line speed of its blade (7) and the feed rate of toothless circular cutter (4). In cutting, toothless circular cutter (4) requires lubrication. By using this method, noise and dustless cutting can be ensured in extruded the plastic profile, thus extending the service life of toothless circular cutter (4), and improve the cutting quality of the profile. Additionally, this announcement also covers a cutting device, a special cutter that is applied to the abovementioned extruded and cutting process.

## Description

**Technical field**

This present invention involves the processing area of plastic profiles, and the specific cutting process used for the extruded plastic profiles, with a particular focus on the cutting method, the applied devices and the relevant cutter.

**Background Technology**

In the technical field of extruding the plastic profiles, it is usually required to cut off the continuous profiles to obtain the proper length, being easy for transporting and subsequent processing. At present, the main device for the extruded plastic profiles is the blade-based cutting device, where mainly the circular saw blades are placed and serrated. When cutting, the saw blades have the rotary motion of the saw teeth, which comes with the feeding action along the cutting path. During the cutting course, the saw teeth subject to the rigid impact may result in a shortened service life. Meanwhile, a broken saw tooth due to bearing a long-term fatigue load will fail to be repaired. If this occurs to more than one, the processing quality on the profile cross-section may be hurt, resulting in the failure of the saw blade. This is complicated by the processing precision of the blade itself that is usually not that high, and the target profiles would come out with inferior quality on cross-section. Under the rigid impact, the working saw teeth would generate larger noises, leading to noise pollution. After a long-term stay in such working environment, the operator may be negatively affected on his hearing. Furthermore, the cutting principle shows that the blade-based cutter involves the use of the saw teeth to one-by-one cut off the profiles. This may cause a lot of dust or debris, resulting in dust pollution to adverse effect the health of workers.

**Invention Content**

This present invention aims to provide a new solution to overcome the disadvantages that may be encountered in the blade cutting process, such as easy damage, big noise, easy to produce dust and poor quality of the cross-section, etc.

To achieve the above goal, this invention shows a kind of cutting method that can be applied in the cutting process of extruded plastic profiles. Here the proposed cutting tool is the toothless circular cutter. It works upon rotary cutting while feeding toward the profiles until they are cut off. The cutter is designed with two kinds of blades: single-blade with an angle of 2°∼6°, and double-blade with an angle of 4°∼12°. The line speed is 20∼100m/min, and the feeding rate is 0.3∼0.7m/min. During the cutting process, it is required to spray the lubricant onto the toothless circular cutter.

Optimally, the mentioned blade has an angle of 3°∼4° for single type, and 4°∼6° for double type. The line speed is 30∼40m/min, and the feeding rate is 0.4∼0.6m/min.

To achieve the above goal, this invention also provides a kind of cutting method that can be applied in the cutting process of extruded plastic profiles. Here the proposed cutting tool includes the cutting tool and the Lubrication Mechanism 12, where the cutting tool is Toothless Circular Cutter 4. The spray nozzle on the Lubrication Mechanism 12 directs at the Toothless Circular Cutter 4.

Such Toothless Circular Cutter 4 consists of the Cutting Body 6 arranged on the inner circle and the Knife Edge 7 on the outer circle. Knife Edge 7 has its angle of [β = 2°∼6° when used as single-type, and α = 4°∼ 12° as double-type.

Optimally, the mentioned blade has an angle of β = 3°∼4° for single type, and α = 4°∼6° for double type.

The said Knife Edge 7 is designed with a Tool Nose 14, H=1∼3mm in height. Tool Nose 14 is B=0.2∼0.4mm in width.

Blade 4 has its Body 6 with thickness of 2∼10mm.

The above-mentioned cutting device also includes Bracket 5, Tool Apron 3, Feeding Mechanism and Drive Mechanism 11, which is mounted to the Tool Apron 3, equipped with an export shaft for the mounting of the Toothless Circular Cutter 4 that works by rotating around the shaft. Feed mechanism is mounted between Bracket 5 and Tool Apron 3, which under the action of feed mechanism, can complete the reciprocating motion along Bracket 5. Lubrication Mechanism 12 is placed on Tool Apron 3.

Such feeding mechanism is comprised of Shaft 2 and Feeding Cylinder 1. Shaft 2 is set on the above Bracket 5, and Tool Apron 3 is sleeved onto Shaft 2. Feeding Cylinder I has the cylinder body and rod that are respectively mounted onto Bracket 5 and Tool Apron 3.

Feeding Cylinder 1 is designed with a Damping Device13.

Drive Mechanism 11 consists of a motor with its reducer. The reducer is installed with above Toothless Circular Cutter 4 on its export shaft.

To achieve the above goal, this present invention also provides a kind of cutting method that can be applied in the cutting process of extruded plastic profiles, including Rack 8, Cutting Device and Clamping Mechanism 10. Such cutting device also has a Driven Rack 9, which is mounted on the guide rail of Rack 8, able to be driven by the action of Cylinder 15 being set between Rack 8 and Driven Rack 9. Such cutting device is installed on Driven Rack 9, the same as Clamping Mechanism 10 for positioning the profiles. Such cutting device also has cutting tool and Lubrication Mechanism 12. The cutting tool is Toothless Circular Cutter 4. The spray nozzle on Lubrication Mechanism 12 directs at Toothless Circular Cutter 4.

Such cutting device includes Bracket 5, Tool Apron 3, Toothless Circular Cutter 4, Feeding Mechanism and Drive Mechanism I I, which is mounted to the Tool Apron 3, equipped with an export shaft for the mounting of the Toothless Circular Cutter 4 that works by rotating around the shaft. Feed mechanism is mounted between Bracket 5 and Tool Apron 3, which under the action of feed mechanism, can complete the reciprocating motion along Bracket 5. Lubrication Mechanism 12 is placed on Tool Apron 3. Clamping Mechanism 10 has two of it, respectively placed on the both sides of Toothless Circular Cutter 4 with a long distance between them.

This present invention has the following useful technical results: This invention involves the use of a toothless circular cutter that works with two motions on the extruded plastic profiles: Rotary motion and feeding motion. Under the action of the both motions, the cutting operation of the plastic profiles can be smoothly and continuously completed, generating no noise and dust that comes along with the operation of saw-blade tools. In order to ensure the smooth cutting operation of the toothless circular cutter, it is required to have the rational options and matching consideration on the toothless circular cutter in terms of its blade angle, line speed, and feed rate, whilst taking into account the area and texture of profiles. In this way, it is ensured that the toothless circular cutter will not have broken teeth and come out with superior quality on the finished cross-section. To add it, it is a must to spray lubricant onto the toothless circular cutter to prevent from the cutter clamping and avoid the temperature rise resulting from working friction in attempt to extend the service life of the cutter. The two clamping mechanisms are placed in a distance between them to avoid the cutter clamping and ensure the smooth operation. Therefore, this invention has achieved the purpose of cutting in a noiseless and dustless environment, with an extended service life of the cutter, enhanced cutting quality, proven to be of higher industrial practical value.

Driven rack works on a reciprocating motion against the rack, enabling the simultaneous motion between the cutting device and the continuously extruded profiles. Each cutting motion is followed by the resetting of the cutting device, waiting until the start-up of the next working circle, making the automatic cutting operation in set lengths.

**Overview of figures**

Fig. 1 is the three-dimensional diagram of cutting machine used for extruded plastic profiles in this invention.

Fig. 2 is the schematic diagram of cutting machine used for extruded plastic profiles in this invention.

Fig. 3 is the schematic cross-section of the toothless circular cutter with double-blade in this invention.

Fig. 4 is the schematic cross-section of the toothless circular cutter with single-blade in this invention.

Where, 1 - Feed Cylinder, 2 - Guide Rail, 3 - Block, 4 - Toothless Circular Cutter, 5 - Rack, 6 - Cutter Body, 7 - Blade, 8 - Rack, 9 - Driven Rack, 10 - Clamping Mechanism, 11 - Driving Mechanism, 12 - Lubrication Mechanism, 13 - Damping Device, 14 - Blade Tip, 15 - Driven Cylinder.

**Implementations**

The following is the detailed illustration on this present invention.

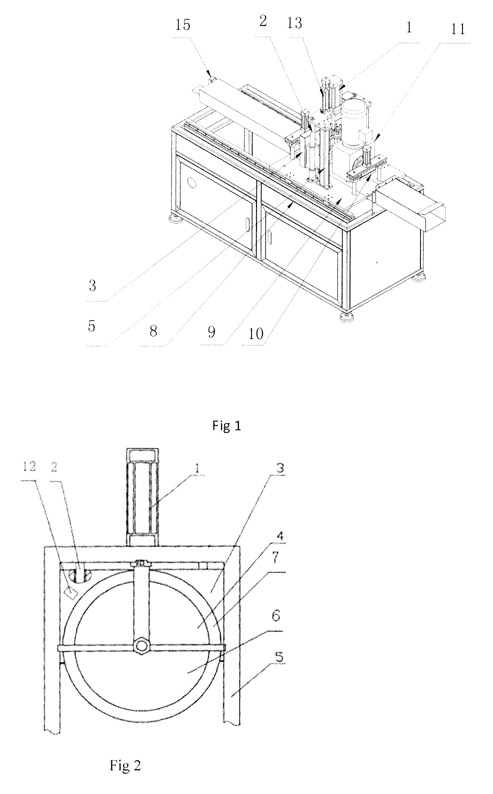

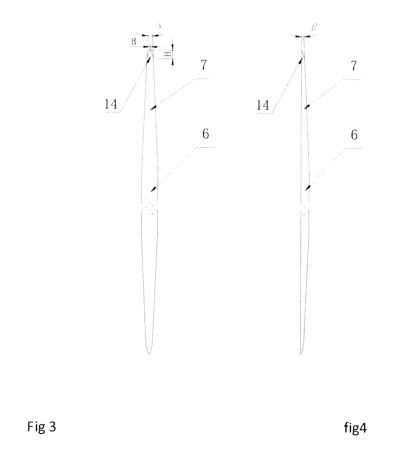

As shown in Fig. 1, 2, 3 and 4, this present invention introduces a cutter for extruded plastic profiles, including Rack 8, Driven Rack 9, Cutting Device, Clamping Device 10 and a Housing. Driven Rack 9 is mounted onto the guide rail of Rack 8, and works on a straight-line reciprocating motion against the rack under the propulsion of Driven Cylinder 15 between Rack 8 and Driven Rack 9. In cutting, Driven Rack 9 and the target extruded profiles work simultaneously, so as to achieve the continuous cutting of the finished profiles. The cutting device is fixed onto the driven rack, and it consists of Bracket 5, Tool Apron 3, Toothless Circular Cutter 4, Feed Mechanism, Driving Mechanism 11, and Lubrication Mechanism 12. Mounted onto Tool Apron 3, Driving Mechanism 11 is a motor with its reducer. The export shaft of the reducer is fixed onto Toothless Circular Cutter 4, which is comprised of Body 6 on the inner circle and the Knife Edge 7 on the outer circle. Knife Edge 7 can either be single-edge or double-edge. For double-edge, Knife Edge 7 comes with an angle α; for single-edge, Knife Edge 7 comes with an angle β. At the end of Knife Edge 7, there is Tool Nose 14, with a height H = 1∼ 3mm, a width of B = 0.2∼0.4mm. Feed mechanism includes Guide Shaft 2 and Feed Cylinder 1. Guide Shaft 2 is vertically placed on the aforementioned Bracket 5. Tool Apron 3 is sleeved onto the Guide Shaft 2, and the body and rod of Feed Cylinder 1 are respectively mounted on Bracket 5 and Tool Apron 3. Tool Apron 3 can feed and reset along the Shaft 2 under the action of Feed Cylinder 1. Feed Cylinder 1 is equipped with a Damping Device 13, which can be oil damping, ensuring the uniform and stable feeding motion. More than that, the damping device can avoid the cutter clamping and lagging, enabling the normal operation. Lubrication Mechanism 12 is set on the Tool Apron 3, with its spray nozzle to direct at Toothless Circular Cutter 4. Mounted on the Driven Rack 9, there are two the Clamping Device 10, respectively placed at both sides of Toothless Circular Cutter 4, with a distance from each other. This arrangement helps to the positioning and clamping actions of the extruded plastic profiles that come in before cutting. The distance retained between the two clamping devices is there to avoid the cutter clamping into the profiles. The housing provided outside the cutting device is to ensure the safety of the operation.

As the extruded plastic profiles move to the cutting position in the continuous finishing, the driven rack, under the action of driven cylinder, will move simultaneously with the target profiles. At this moment, the clamping device works to complete the positioning of the target profiles. This is followed by the action of the motor on the cutting device. The motor is reduced to drive the rotation of the toothless circular cutter. Along with this, feed cylinder located on the cutting device drives the feeding motion of the block, making the cutting work of the rotary toothless circular cutter. During the cutting process, the nozzle on the lubrication mechanism sprays the lubricant onto the toothless circular cutter to reduce the friction that occurs in the cutting process, and this is also useful in avoiding the cutting clamping and extending the service life of the cutter. After the cutting work is over, feed cylinder resets to drive the block back to its starting position. After that, the motor will end working and the toothless circular cutter stops rotating. At the same time, the clamping device releases the profiles, and the driven rack comes back to the original place under the dragging action of the driven cylinder. The entire cutting work ends as a cycle, waiting until the next cycle work to start up. The cutting cycle work is controlled by the entire automatic extruded system to achieve the cutting in due length. The finished plastic products are transferred by the transporting department or personnel to the packing section.

Regarding different cases, the above technical solution may have different morphs, e.g. some of the profiles with simple cross-section texture and smaller area may be treated with the tools with a straight line blade. In the cutting process, the upward blade line that avoids the relative motion between the blade and the profiles can complete the cutting operation.

The toothless circular cutter may work with a cutting blade that is either in double-edge and single-edge. This solution takes into account the possibility of the feeding motion as part of the cutting motion. It is therefore more inclined to use the double-edge tools to get better results with less cutting force. This can be compared to the single-edge blade, which features simple texture and is easy to be made. When it is dominated by the cutting motion, it is a better option. Alternatively, the choice of the blade angle should be as small as possible so long as the blade has adequate strength. The smaller the blade angle, the less the section faults. Additionally, it is also necessary to care about the section texture and area. For the toothless circular cutter, the blade angle, the rotary cutting speed, the linear feeding motion rate should be optimized by considering the section texture and area.

At present, the plastic profiles that are commonly used may have a smaller cross-section area. As the double-edge blade has an angle α from 2.5° to even as small as 1.5°, the higher line speed of the cutting blade, plus the condition of the room temperature 10∼35°C, can complete the continuous operation without having the broken and clamping cutter. Under the same scenario, the single-edge tools may provide the effects similar to the above. Due to this, the profiles with a smaller section area may bear higher cutting speeds and smaller blade angles. For the larger blade angles, more consideration should be given to the large section area and the more complicated section texture. Principally, the blade angle should be as small as possible to guarantee the service life of the cutters.

Based on the number of tests: (1) under the condition of the profiles with a smaller area, simple texture and lower temperature, e.g. room temperature (about 10∼35°C), the single-edge cutter may work with its blade angle β = 2°, and the double-edge cutter with its blade angle α = 4°, and the line speed of the tip is 100m/min, and the feeding rate 0.3m/min. Also, the cutter should be provided with lubrication to ensure the smooth cutting operation to achieve the goal of this invention. (2) When it comes to the smaller section area and simple texture, single-edge blade may have the angle β = 4°, and the double-edge cutter with its blade angle α = 6°, and the line speed of the tip is 30m/min, and the feeding rate 0.6m/min. Also, the cutter should be provided with lubrication to ensure the smooth cutting operation to achieve the goal of this invention. (3) For the large section area and complex texture, single-edge blade may have the angle β = 3°, and the double-edge cutter with its blade angle α = 4°, and the line speed of the tip is 40m/min, and the feeding rate 0.4m/min. Also, the cutter should be provided with lubrication to ensure the smooth cutting operation to achieve the goal of this invention. (4) If the profiles have a large section area and complex texture, single-edge blade may have the angle β = 6°, and the double-edge cutter with its blade angle α = 12°, and the line speed of the tip is 20m/min, and the feeding rate 0.7m/min. Also, the cutter should be provided with lubrication to ensure the smooth cutting operation to achieve the goal of this invention.

To meet the requirements of different types of profiles, the toothless circular cutter for single-edge may have the blade angle β = 3°∼4°, and for double-edge, the angle α = 4°∼6°, and the line speed of the tip is 30-40m/min, and the feeding rate 0.4-0.6m/min. Thus, this solution is still inclined to keep the service life of the cutter whilst using the smaller blade angles. By adoption of the larger values in the range of the angle options, the tools would be likely to see a longer service life, compared to the smaller values to obtain the currently acceptable better section quality. Such a scope can meet both the requirements of cutting tools and section quality. In the choice of the cutter thickness, it is required to observe the diameter of the disk and the blade angle. Here the key factor is the diameter of the disk. For the common profiles, the cutting tools are 2∼10mm in thickness.

This present invention shows the cutting method for the extruded plastic profiles: the cutting tool is a toothless circular cutter, which works in two motions in cutting the extruded plastic profiles: one is that the cutter comes into a cutting motion by rotating around an axis that vertically comes through its center, another is that the cutter feeds along a straight line toward the target profiles, i.e. while the cutter is rotating, it is feeding toward the profiles, with the blade angle, line speed and feeding rate depending on the section area, complexity and the temperature, etc. In the cutting course, it is a must to spray the lubricant onto the cutter, aimed at the reduction of the cutter damping and the clamping, ultimately extending the service life of the cutter.

This present invention finds its application in the industrial production as an effective solution to the problems such as damages of saw web, noise, dust and the section quality that may occur to the traditional saw-blade cutting process. As a bonus, the service life the cutter is extended. By enabling the continuous finishing of the extruded plastic profiles in a due length, its application reveals higher industrial values.

In spite of the above cases revealed, this invention is not limited to its use scope. Without in violation of this principle and tenet, the technicians who are familiar with this field may produce different types of morphs based on this invention. These morphs, however, shall be covered in the scope as required by the rights attached hereto.

## Claims

1. A kind of cutting method use for the extruded plastic profiles, where the cutting
tools are a toothless circular cutter, the cutter works by combining the rotary cutting with the feeding action into one until the profiles are cut off, the blade of the cutter is designed with an angle of 2°∼6° for single-edge type, and 4°∼12° for double-edge type, the tip of the blade is defined with a line speed of 20~100m/min and the feeding rate of 0.3~0.7m/min, during the cutting process, it is required to spray the lubricant onto the toothless circular cutter.

2. The cutting method for the extruded plastic profiles according to Claim I, wherein: blade of the said toothless circular cutter is designed with an angle of 3°~4° for single-edge type and 4°∼6° for double-edge type, the tip of the blade is defined with a line speed of 30~ 40 m/min and the feeding rate of 0.4~0.6m/min.

3. Regarding the cutting method as described in Claim 1, a kind of applied cutting
device for the extruded plastic profiles may include the cutting tools and Lubrication Mechanism (12), wherein: the Toothless Circular Cutter (4) as described, and the spray nozzle on the Lubrication Mechanism (12) directs at the Toothless Circular Cutter (4).

4. The cutting device for the extruded plastic profiles according to Claim 3, wherein: said Toothless Circular Cutter (4) consists of Body (6) in the inner circle and the Blade (7) in the outer circle, where Blade (7) is designed with an angle of β=2°∼6° for single-edge type and α=4°∼12° for double-edge type.

5. The cutting device for the extruded plastic profiles according to Claim 4, wherein: Blade (7) of the said Toothless Circular Cutter (4) is designed with an angle of β=3°~4° for single-edge type and α=4°∼6° for double-edge type.

6. The cutting device for the extruded plastic profiles according to Claim 4, wherein: said Blade (7) has a Tip (14), which is H=1~3mm in height and B=0.2~0.4mm in width.

7. The cutting device for the extruded plastic profiles according to Claim 5, wherein: said Blade (7) has a Tip (14), which is H=1~3mm in height and B=0.2~0.4mm in width.

8. The cutting device for the extruded plastic profiles according to Claim 4, wherein: said Toothless Circular Cutter (4) has a Body (6) that is 2~10mm in thickness.

9. The cutting device for the extruded plastic profiles according to Claim 3, wherein: said cutting device also includes Bracket (5), Tool Apron (3), Feeding Mechanism, and Driving Mechanism (11), which is mounted onto Tool Apron (3) has an export shaft for holding the Toothless Circular Cutter (4), making it rotary around the shaft, Feeding Mechanism is placed between Bracket (5) and Tool Apron (3), under the action of the feeding mechanism, Tool Apron (3) can works along Bracket (5) in reciprocating motions, lubrication Mechanism (12) is set on Tool Apron (3).

10. The cutting device for the extruded plastic profiles according to Claim 4, wherein: said cutting device also includes Bracket (5), Tool Apron (3), Feeding Mechanism, and Driving Mechanism (11), which is mounted onto Tool Apron (3) has an export shaft for holding the Toothless Circular Cutter (4), making it rotary around the shaft, Feeding mechanism is placed between Bracket (5) and Tool Apron (3), under the action of the feeding mechanism, Tool Apron (3) can works along Bracket (5) in reciprocating motions, lubrication Mechanism (12) is set on Tool Apron (3).

11. The cutting device for the extruded plastic profiles according to Claim 5, wherein: said cutting device also includes Bracket (5), Tool Apron (3), Feeding Mechanism, and Driving Mechanism (11), which is mounted onto Tool Apron (3) has an export shaft for holding the Toothless Circular Cutter (4), making it rotary around the shaft, Feeding mechanism is placed between Bracket (5) and Tool Apron (3), under the action of the feeding mechanism, Tool Apron (3) can works along Bracket (5) in reciprocating motions, lubrication Mechanism (12) is set on Tool Apron (3).

12. The cutting device for the extruded plastic profiles according to Claim 6, wherein: said cutting device also includes Bracket (5), Tool Apron (3), Feeding Mechanism, and Driving Mechanism (11), which is mounted onto Tool Apron (3) has an export shaft for holding the Toothless Circular Cutter (4), making it rotary around the shaft, Feeding mechanism is placed between Bracket (5) and Tool Apron (3), under the action of the feeding mechanism, Tool Apron (3) can works along Bracket (5) in reciprocating motions, lubrication Mechanism (12) is set on Tool Apron (3).

13. The cutting device for the extruded plastic profiles according to Claim 7, wherein: said cutting device also includes Bracket (5), Tool Apron (3), Feeding Mechanism, and Driving Mechanism (11), which is mounted onto Tool Apron (3) has an export shaft for holding the Toothless Circular Cutter (4), making it rotary around the shaft, Feeding mechanism is placed between Bracket (5) and Tool Apron (3), under the action of the feeding mechanism, Tool Apron (3) can works along Bracket (5) in reciprocating motions, lubrication Mechanism (12) is set on Tool Apron (3).

14. The cutting device for the extruded plastic profiles according to Claim 9, wherein: said Feeding Mechanism includes Guide Shaft (2) and Feeding Cylinder (1), said Guide Shaft (2) is placed on Bracket (5), and Tool Apron (3) is sleeved onto Guide Shaft (2), Feeding Cylinder (1) has its body and rod that are respectively fixed onto Bracket (5) and Tool Apron (3).

15. The cutting device for the extruded plastic profiles according to Claim 14, wherein: said Feeding Cylinder (1) is equipped with a Damping Device (13).

16. The cutting device for the extruded plastic profiles according to Claim 9, wherein: said Driving Mechanism (12) includes a motor with its reducer, which has an export shaft that is mounted with the said Toothless Circular Cutter (4).

17. According to the above-mentioned Claim 3, the cutter for the extruded plastic profiles includes Rack (8), Cutting Device, and Clamping Device (10), wherein: said cutter also includes a Driven Rack (9), which is fixed onto the guide rail of Rack (8) and is able to work in reciprocating motions between Rack (8) and Driven Rack (9) under the action of Driven Cylinder (15), the cutting device is mounted onto Driven Rack (9), where Clamping Device (10) is available for the positioning of the profiles, said cutting device includes cutting tools and Lubrication Mechanism (12), where the cutting tools are the Toothless Circular Cutter (4), and the spray nozzle on the Lubrication Mechanism (12) directs at the Toothless Circular Cutter (4).

18. the cutter for the extruded plastic profiles according to Claim 17, wherein: said cutting device includes Bracket (5), Tool Apron (3), Toothless Circular Cutter (4), Feed Mechanism, Driving Mechanism (11), which is mounted onto Tool Apron (3) and equipped with an export shaft for the placement of Toothless Circular Cutter (4), making it rotary around the shaft, feeding mechanism is placed between Bracket (5) and Tool Apron (3), where Tool Apron (3) can work in reciprocating motions along Bracket (5) under the action of the feed mechanism, lubrication Mechanism (12) is set on Tool Apron (3), Clamping Device (10) is two in number and they are placed at both sides of Toothless Circular Cutter (4), with a distance from each other.
